(19) Europäisches Patentamt
European Patent Office
Office européen des brevets

(11) **EP 1 931 539 B1**

(12) **EUROPÄISCHE PATENTSCHRIFT**

(45) Veröffentlichungstag und Bekanntmachung des Hinweises auf die Patenterteilung:
**10.08.2011 Patentblatt 2011/32**

(21) Anmeldenummer: **07765319.4**

(22) Anmeldetag: **05.06.2007**

(51) Int Cl.:
**B60R 21/0132** (2006.01)

(86) Internationale Anmeldenummer:
**PCT/EP2007/055511**

(87) Internationale Veröffentlichungsnummer:
**WO 2008/003558 (10.01.2008 Gazette 2008/02)**

(54) **SENSORSYSTEM FÜR EIN LENKRAD EINES KRAFTFAHRZEUGES**

SENSOR SYSTEM FOR A STEERING WHEEL OF A MOTOR VEHICLE

SYSTÈME DE DÉTECTION POUR UN VOLANT D'UN VÉHICULE AUTOMOBILE

(84) Benannte Vertragsstaaten:
**DE FR**

(30) Priorität: **03.07.2006 DE 102006031207**

(43) Veröffentlichungstag der Anmeldung:
**18.06.2008 Patentblatt 2008/25**

(73) Patentinhaber: **Takata-Petri AG**
**63743 Aschaffenburg (DE)**

(72) Erfinder: **KANDLER, Marcus**
**63639 Flörssbachtal (DE)**

(74) Vertreter: **Gross, Felix et al**
**Patentanwälte Maikowski & Ninnemann**
**Postfach 15 09 20**
**10671 Berlin (DE)**

(56) Entgegenhaltungen:
**EP-A- 1 319 571    EP-A- 1 491 409**
**EP-A- 1 621 442**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Sensorsystem für ein Lenkrad nach dem Oberbegriff des Anspruchs 1 und ein Lenkrad nach Anspruch 19.

In der Fahrzeugtechnik besteht die ständige Notwendigkeit, die aktive und passive Sicherheit eines Kraftfahrzeuges zu verbessern. Für die Verbesserung sowohl der aktiven als auch der passiven Sicherheit ist es notwendig, dass schnell und zuverlässig Fahrdaten des Kraftfahrzeugs erfasst und weiter verarbeitet werden können. Nur so können sicherheitsrelevante Einrichtungen für die aktive Sicherheit (z.B. ABS-Systeme) oder für die passive Sicherheit (z.B. Airbags) angesteuert werden.

Diese Systeme können nur zuverlässig arbeiten, wenn relevante Daten durch Sensoren effizient erfasst werden. Zum Beispiel wird im Fall eines Aufpralls in sehr kurzer Zeit ein Impuls auf das Kraftfahrzeug eingebracht.

In der EP 1 491 409 B1 wird ein Fahrzeugsicherheitssystem beschreiben, bei dem in oder an einem Lenkradkranz eines Lenkrades ein kapazitiver Sensor angeordnet ist, der eine Veränderung eines elektrischen oder elektromagnetischen Feldes erfasst. Die von dem Sensor erfassten Daten werden an eine Steuereinheit übertragen und dort ausgewertet.

Die EP 1 621 442 A2 beschreibt ein Lenkrad mit einem Sensor, der die Verformung eines Lenkrades auf Grund einer Einwirkung eines Fahrers auf das Lenkrad ermittelt. Mit dem Sensor wird die Kraft gemessen, mit der der Fahrer in das Lenkrad greift.

Der vorliegenden Erfindung liegt die Aufgabe zugrunde, eine Vorrichtung zu schaffen, mit der schnell und effizient insbesondere auf Aufprallereignisse reagiert werden kann.

Die Aufgabe wird dadurch gelöst, dass im und / oder an einem Lenkradkranz mindestens ein Sensormittel zur Erfassung der Wirkung einer Beschleunigung angeordnet ist. Dabei weist das mindestens eine Sensormittel eine kapazitive und / oder eine induktive Sensoreinheit auf oder ist mit einer kapazitiven und / oder induktiven Sensoreinheit gekoppelt, wobei die kapazitive und / oder induktive Sensoreinheit mit Teilen des Lenkradkranzes unterschiedlicher Masse, Steifigkeit und / oder Dichte gekoppelt sind, so dass aus der Verformung der Teile des Lenkradkranzes ein Signal zur Erfassung der Beschleunigung generierbar ist.

Besonders vorteilhaft ist es, wenn der Lenkradkranz mindestens einen elektrischen Außenleiter und mindestens einen elektrischen Innenleiter zur Bildung einer koaxialen Anordnung aufweist. Damit können bauteileigene Komponenten im Rahmen des Sensormittels verwendet werden.

Ferner ist es vorteilhaft, wenn das Sensormittel die Feldwirkung, die Kraftwirkung und / oder die resultierende Verformung eines Teils des Lenkrades relativ zu dem mindestens einen Außenleiter und / oder zu dem mindestens einen Innenleiter erfasst. Diese Größen lassen sich gut erfassen und stellen ein Maß für die Beschleunigung bzw. deren Wirkung dar. Eine Wirkung ist z.B. eine sich im Lenkrad bis zum Lenkradkranz ausbreitende Schwingung.

Eine einfache Bauform ergibt sich, wenn das Sensormittel den Abstand zwischen zwei Teilen des Lenkradkranzes erfasst.

In Verbindung mit einer koaxialen Anordnung ist es vorteilhaft, wenn die kapazitive und / oder induktive Sensoreinheit mit dem mindestens einen Außenleiter und mindestens einem Innenleiter gekoppelt sind.

Eine vorteilhafte Ausführungsform des Sensorsystems weist ein Sendemittel auf, insbesondere mindestens eine Antennenschlaufe zur Abstrahlung einer Koaxialwelle, einer TE-Welle, einer TM-Welle, einer TEM-Welle und / oder Welle und ein Sensormittel zur Detektion einer Reflexion der Koaxialwelle, der TE-Welle, der TM-Welle, der TEM-Welle und / oder der Welle. Dabei ist es besonders vorteilhaft, wenn mindestens zwei Leiterschlaufen im Lenkradkranz angeordnet sind. Wenn vorteilhafterweise vier Leiterschlaufen symmetrisch im Lenkradkranz, insbesondere jeweils in einem Quadranten, angeordnet sind, ist eine Richtungserfassung besonders effizient möglich. Auch ist es vorteilhaft, wenn mindestens eine Antennenschlaufe und / oder mindestens eine Leiterschlaufe zur richtungsweisenden Erkennung einer Kraftwirkung verwendbar ist.

Weiterhin ist es vorteilhaft, wenn das Empfängermittel eine Veränderung einer Eigenschaft der Koaxialwelle, insbesondere einer Feldlinienänderung und / oder eine Dämpfung in Abhängigkeit einer Relativbewegung von Teilen des Lenkrades erfasst. Mit Vorteil erfasst das Empfängermittel den Reflexionsfaktor.

Eine besonders einfache Bauform ergibt sich, wenn das Skelett des Lenkradkranzes mindestens teilweise als Innenleiter ausgebildet ist. Eine weitere vorteilhafte Ausführung besteht darin, dass eine Lenkradheizung im Lenkradkranz mindestens teilweise als Außenleiter ausgebildet ist.

Die Änderung von Signalen im Inneren des Lenkradkranzes ist beeinflussbar, indem mindestens ein dielektrisches Element im Lenkradkranz angeordnet ist. Besonders vorteilhaft ist es, wenn das dielektrische Element als Schaumstoffummantetung und / oder Flüssigkeitsbehälter im Lenkradkranz angeordnet ist.

Vorteilhafterweise ist der Lenkradkranz elektrisch gegenüber dem Lenkradteller isoliert.

Erfindungsgemäß ist der Einfluss von einer Beschleunigung erfassbar, wobei es vorteilhaft ist, wenn ein Auslösemittel für einen Airbag in Abhängigkeit von einem vom Sensormittel generierten Auslösesignal den Airbag zündet.

Damit das Sensormittel nicht bei üblichen Beschleunigungen im Kraftfahrzeug anspricht, ist es vorteilhaft, dass das Auslösesignal vom Sensormittel erst abgegeben wird, wenn die Wirkung der Beschleunigung einen vorbestimmten Wert überschreitet.

Die Aufgabe wird auch durch ein Lenkrad mit einem erfindungsgemäßen Sensorsystem gelöst.

Die Erfindung wird nachfolgend unter Bezugnahme auf die Figuren der Zeichnungen an mehreren Ausführungsbeispielen näher erläutert. Es zeigen:

Fig. 1    eine schematische Schnittansicht durch einen Lenkradkranz mit einer ersten Ausführungsform des Sensorsystems;

Fig. 2    eine schematische Schnittansicht durch einen Lenkradkranz mit einer zweiten Ausführungsform des Sensorsystems;

Fig. 3A    einen Querschnitt durch einen Lenkradkranz mit einer koaxialen Anordnung;

Fig. 3B    einen Längsschnitt durch einen Lenkradkranz mit einer koaxialen Anordnung;

Fig. 4    einen Querschnitt durch einen Lenkradkranz mit Flüssigkeitsbläschen gemäß der dritten Ausführungsform;

Fig. 5    einen Querschnitt durch einen Lenkradkranz mit einer Antennenschlaufe;

Fig. 6    eine schematische Darstellung der Entkopplung des Lenkradkranzes vom Lenkradteller;

Fig.7    eine schematische Darstellung eines Lenkrades mit vier integrierten Leiterschlaufen.

Bei einem Aufprall führt eine negative Beschleunigung über eine Kraftwirkung zu unterschiedlichen Verformungen der Karosserie und Kraftfahrzeugteilen. Die Beschleunigung und deren Kraftwirkung hängt dabei von der Masse des jeweiligen Kraftfahrzeugteils ab, d.h. bei gleicher Krafteinwirkung, werden leichtere Teile des Kraftfahrzeuges weniger beschleunigt als schwerere Teile des Kraftfahrzeugs. Die Beschleunigung kann sich auch in Form einer Schwingung auswirken.

Im Folgenden werden unterschiedliche Ausführungsformen eines erfindungsgemäßen Sensorsystems dargestellt, bei denen jeweils ein Sensormittel 1 vorgesehen ist, mit dem die Beschleunigung B auf das Kraftfahrzeug schnell und effizient erfassbar ist.

Dabei ist bei den ersten drei Ausführungsformen das Sensormittel 1 mit einer koaxialen Anordnung mit einem Außenleiter 1A und einem Innenleiter 1 B gekoppelt. Die Eingangssignale 4 des Sensormittels 1 werden durch elektrische Wechselwirkungen zwischen dem Außenleiter 1A und dem Innenleiter 1B erzeugt, wobei die Wechselwirkungen sich aus den Beschleunigungswirkungen ergeben, die auf das Lenkrad oder Teilen davon einwirken.

Die erste Gruppe von Ausführungsformen bezieht sich auf Änderungen der Kapazität C und / oder der Induktivität L im Lenkradkranz 10, die vom Sensormittel 1 in Ausgangssignale 5 umgesetzt werden. Die Ausgangssignale 5 werden dazu verwendet, andere Teile des Kraftfahrzeuges anzusprechen bzw. auszulösen. So kann ein Ausgangssignal 5 dazu verwendet werden, einen hier nicht dargestellten Airbag im Lenkrad auszulösen, wenn ein vorbestimmter Wert für die Beschleunigung B erreicht wird.

Ferner weist das Sensormittel 1 eine induktive Sensoreinheit 2 und / oder eine kapazitive Sensoreinheit 3 auf.

Die Änderungen der Kapazität und / oder der Induktivität werden durch Änderungen der Abstände zwischen Teilen des Lenkradkranzes 10 hervorgerufen, nämlich dem Außenleiter 1A und dem Innenleiter 1B. Die Abstandsänderungen lassen sich auf unterschiedliche Beschleunigungen (d.h. Kraftwirkungen) innerhalb des Lenkradkranzes 10 zurückführen.

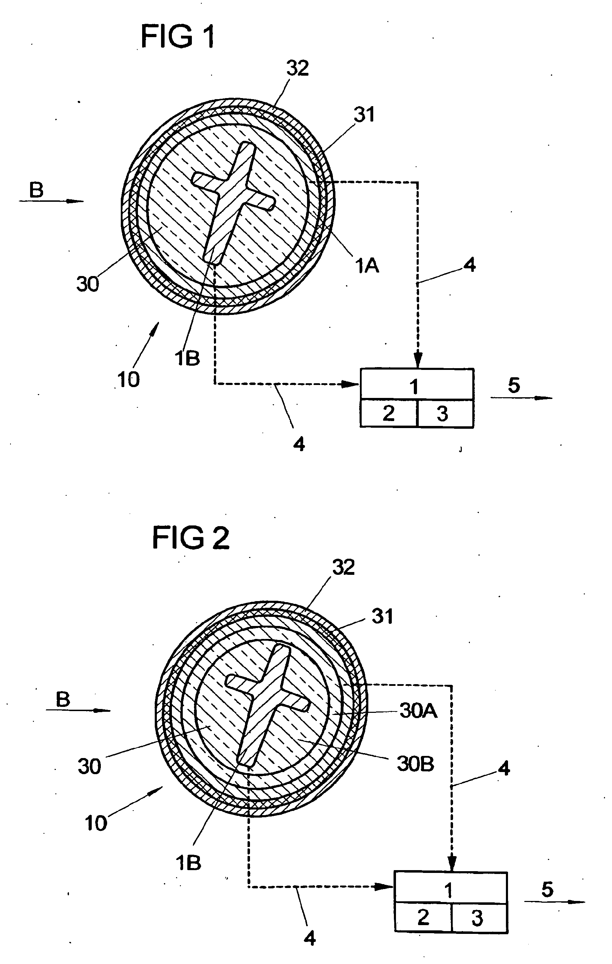

In Fig. 1 ist eine erste Ausführungsform dargestellt, bei der die Kapazität als Messgröße verwendet wird.

In Fig. 1 ist ein Schnitt durch einen Lenkradkranz 10 dargestellt, der von innen nach außen folgenden Aufbau aufweist. Im Inneren ist das Skelett des Lenkradkranzes 10 angeordnet, das hier den elektrisch leitenden Innenleiter 1A einer koaxialen Anordnung bildet. Das Skelett 1A ist von einer Schaumschicht umgeben, die hier als dielektrisches Element 30 ausgebildet ist.

Die Schaumschicht 30 ist in dieser Ausführrungsform von zwei Abschirmmitteln umgeben. Ein Heizgewebe 1 B am Umfang des Lenkradkranzes 10 bildet den Außenleiter 1 B der koaxialen Anordnung. Zusätzlich, aber nicht zwingend, ist noch eine weitere Abschirmschicht 31 innerhalb des Außenleiters 1A angeordnet. Grundsätzlich können auch mehrere Heizgewebe verwendet werden.

Außen ist der Lenkradkranz von einer Hülle 32 umgeben, die aus Holz, Leder oder Kunststoff bestehen kann.

Die koaxiale Anordnung mit Innenleiter 1 B und Außenleiter 1A ist in erster Näherung als ein koaxiales Kabel aufzufassen, dessen Kapazität C durch

$$ C = \frac{Q}{U} = \frac{2\pi\varepsilon l}{\ln\dfrac{r_A}{r_I}} $$

gegeben ist. Dabei gibt I die Länge der koaxialen Anordnung an (etwa die Länge des Lenkradkranzes 10), $r_I$ ist der Radius des Innenleiters 1B, $r_A$ der Radius zum Außenleiter 1A. Das Lenkradskelett 1 B hat bei der Ausführrungsform gemäß Fig. 1 keinen kreisförmigen Querschnitt, so dass diese Gleichung nur näherungsweise gilt.

Durch eine Beschleunigung B, die auf den Lenkradkranz 10 einwirkt, ändern sich die geometrischen Verhältnisse im Lenkradkranz 10. Durch eine Kompression des dielektrischen Elementes 30, d.h. der Schaumschicht, ändert sich der Abstand zwischen dem Innenleiter 1B und dem Außenleiter 1A, was gemäß der obigen Gleichung als Kapazitätsänderung messbar ist. Verringert sich der Abstand von Außenleiter 1A zum Innenleiter 1B (bei konstantem Durchmesser des Innenleiters 1B), so sinkt die Kapazität.

In einer zweiten Ausführungsform gemäß Fig. 2 wird der Grundaufbau der ersten Ausführungsform übernommen, so dass auf die entsprechenden Erläuterungen Bezug genommen werden kann.

Allerdings wird hier das dielektrische Element 30 in zwei Schichten 30A, 30B unterteilt. Die Schaumkomponente in der ersten Schicht 30A weist dabei eine andere Dichte oder ein anderes Kompressionsmodul auf, als die Schaumkomponente in der zweiten Schicht 30B. Ein Unterschied im Kompressionsmodul gibt an, in welchem Ausmaß sich der Schaum unter einer Belastung komprimieren lässt.

Die beiden Ausführungsformen gemäß Fig. 1 und 2 sind im Zusammenhang mit einem. kapazitiven Messverfahren beschrieben worden.

Alternativ oder zusätzlich kann auch ein induktives Messverfahren angewandt werden. Die Beschleunigung bzw. Kraftwirkung auf den Lenkradkranz und dessen Teile führt auch zu einer Veränderung der Induktivität L.

Bei einer koaxialen Kabelanordnung, die näherungsweise angenommen werden kann, ist die Induktivität gegeben als

$$L = \frac{\mu_0 \mu_r l}{2\pi} \left( \ln \frac{r_A}{r_I} + 0{,}25 \right)$$

Wird der Abstand $r_A$ zwischen Außenleiter 1A und Innenleiter 1B verringert, so sinkt die Induktivität.

Die Ausführungsformen gemäß Fig. 1 und 2 sind hier frequenzunabhängig dargestellt worden. Die Ausführungsformen können aber ohne weiteres auch eine frequenzabhängige Auswertung aufweisen, so dass Amplitudensignale und / oder Phasensignale ausgewertet werden können.

Eine dritte Ausführungsform des erfindungsgemäßen Sensorsystems geht ebenfalls von einer koaxialen Anordnung aus, wobei allerdings die Wirkung einer Beschleunigung in anderer Weise ermittelt wird.

Dabei wird von der gleichen koaxialen Grundkonfiguration ausgegangen, wie sie in Fig. 1 oder 2 beschrieben ist. Dabei wird die Beeinflussung der Feldlinien einer im Lenkradkranz 10 befindlichen Koaxialwelle und / oder Welle als Messgröße verwendet. Dabei ist die Dielektrizitätskonstante des Dielektrikums 30 (z.B.

Schaumstoff) für die Ausbreitung der Koaxialwelle verantwortlich.

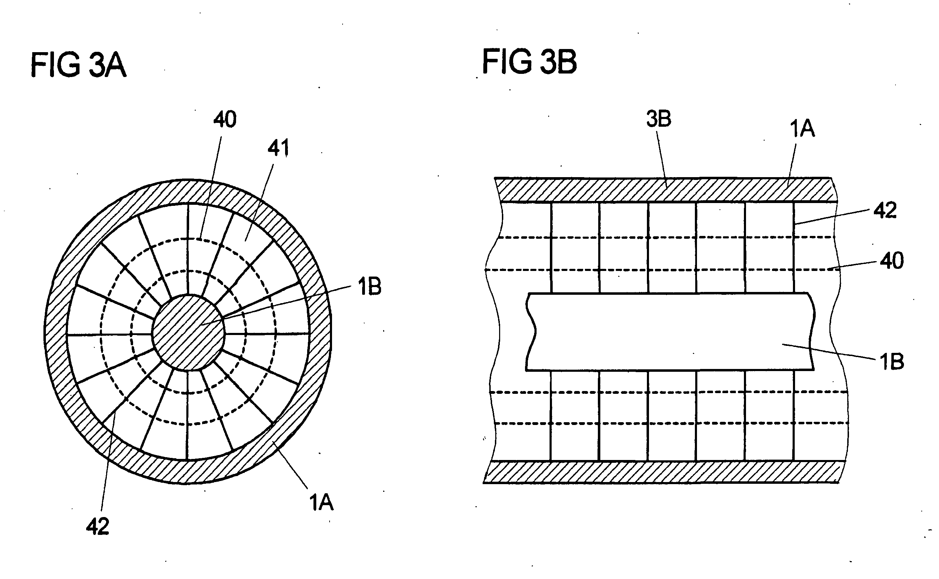

Im Folgenden werden die grundlegenden Prinzipien dieser Ausführungsform in Zusammenhang mit einem Lenkradkranz dargestellt, wobei auf Fig. 3A und 3B Bezug genommen wird. Fig. 3A stellt einen Querschnitt durch eine koaxiale Anordnung dar, Fig. 3B einen Längsschnitt. In Fig. 3A und 3B ist die Krümmung des Lenkradkranzes vernachlässigt.

Die elektrischen Feldlinien der Koaxialwelle (TEM-Welle), bei der keine Feldstärkekomponenten in Richtung der Leitungsachse (in Fig. 3A senkrecht zur Zeichnungsebene) auftreten, verlaufen radial in der Querschnittsebene. Der Feldcharakter wird ferner durch die in Fig. 3A gestrichelt eingezeichneten Äquipotentiallinien 40 (ringförmig) bestimmt. Zwischen zwei benachbarten Äquipotentiallinien 40 liegt die gleiche Spannungsdifferenz $\Delta U = U/m$ , wenn U die Gesamtspannung zwischen den Leitern 1 A, 1 B und m die Zahl der Streifen gleicher Potentialdifferenz ist. In der Abb. 3A beträgt m = 3, da drei konzentrische Ringe angenommen werden.

Die Feldlinien dagegen teilen den Querschnitt in n Äquikapazitätsstreifen 41 ein; in Fig. 3A ist n = 16. Die Kapazität $C_s$ eines solchen Äquikapazitätsstreifens 41 ergibt sich aus der Serienschaltung der durch die Äquipotentiallinien .gebildeten und von den Feldlinien begrenzten Elementarkapazitäten $C_E$ (Kästchen), $C_s = C_E/m$.

Die Leitungskapazität pro cm Leitungslänge, der so genannte Kapazitätsbelag C', ist dann durch Parallelschaltung der in n = 16-Äquikapazitäten $C_s$ zu ermitteln, also aus deren Summe

$$C' = \sum C_s = \varepsilon_0 \varepsilon_r \frac{n}{m}$$

Als Zahlenwertgleichung in pF/cm:

$$C' = 0{,}089 \varepsilon_r \frac{n}{m}$$

Die Induktivität der Leitung pro Zentimeter Leitungslänge, der so genannte Induktionsbelag L' ist ebenfalls aus dem Feldbild zu entnehmen. Für ein homogenes Dielektrikum mit der Permeabilität $\mu_r$ gilt:

$$L' = \mu_0 \mu_r \frac{m}{n}$$

oder in Zahlen (nH/cm)

$$L' = 4\pi\mu_r \frac{m}{n}$$

Der Wellenwiderstand Z (in Ohm) ist der an jeder beliebigen Stelle einer verlustfreien Hochfrequenzleitung gemessene Quotient aus Spannung und Strom der fortschreitenden Koaxialwelle. Er ist für verlustfreie Leitungen reell und damit:

$$Z = \sqrt{\frac{L'}{C'}} = \frac{m}{n}\sqrt{\frac{\mu_0}{\varepsilon_0}\frac{\mu_r}{\varepsilon_r}}$$

mit $\sqrt{\dfrac{\mu_0}{\varepsilon_0}} = 120$ ist

$$Z = \frac{377m}{n}\sqrt{\frac{\mu_r\mu_0\mu_{rm}}{\varepsilon_r\varepsilon_0\varepsilon_{rm}}}$$

In der obigen Gleichung bedeutet $m$ die Anzahl der Dielektrika bzw. Permeabilitäten.

Da der Wellenwiderstand somit einen konstanten Wert für den gesamten koaxialen Wert für den gesamten Leitungsweg darstellt, kann er auch in Abhängigkeit vom Innendurchmesser D des Außenleiters 1A und vom Außendurchmesser des Innenleiters 1B angegeben werden:

$$Z = \frac{60}{\sqrt{\varepsilon_r}}\ln\frac{D}{d}$$

wobei $\varepsilon_r$ die relative Dielektrizitätskonstante des Dielektrikums zwischen Innen- und Außenleiter 1A, 1 B ist.

Die bestimmende Kenngröße für eine koaxiale Verbindung ist somit der Wellenwiderstand Z.

Aus der obigen Beziehung für den Wellenwiderstand Z wird deutlich, dass eine Änderung des Durchmessers einen Einfluss auf den Wellenwiderstand Z hat, der nachweisbar ist. Dies wird weiter unten noch beschrieben. Wird z.B. der Durchmesser D kleiner, so sinkt auch der Wellenwiderstand Z.

Dämpfung und Skineffekt

Die Summe folgender Verlustanteile bewirkt die Dämpfung elektromagnetischer Wellen auf der koaxialen Leitung:

$\alpha_I$     Widerstandsdämpfung des Innenleiters 1B
$\alpha_A$     Widerstandsdämpfung des Außenleiters 1A
$\alpha_G$     Ableitungsdämpfung

Für die Dämpfung $\alpha$ gilt allgemein $\alpha = \alpha_R + \alpha_G$. Hierbei ist $\alpha_L = \alpha_i + \alpha_a$ der Betrag der so genannten Längsdämpfung.

Die Widerstandsdämpfungen werden durch den bei hohen Frequenzen wirksamen Skineffekt maßgebend beeinflußt. Für die Berechnung der Verluste wird vorausgesetzt, dass die Ströme nur in der so genannten äquivalenten Leitschichtdicke gleichmäßig verteilt fließen. Bei unmagnetischen Stoffen - mit $\mu_r = 1$ - ergibt sich die Leitschichtdicke s als Zahlenwertgleichung (cm; Hz):

$$s = \frac{6,4k_1}{\sqrt{f}}$$

Der Korrekturfaktor $k_1$ ist vom verwendeten Leitermaterial abhängig und beträgt z.B. für Silber normiert $k_1 = 1,0$ und für Gold $k_1 = 1,17$. Ferner ist der spezifische Flächenwiderstand Q' als der Widerstand eines Oberflächenstückes der Dicke s mit der Länge 1 cm und der Breite 1 cm definiert. So wird für $\mu_r = 1$ und mit der Leitfähigkeit N($s/M$)

$$Q' = \frac{1}{Ns} = 2,5 \cdot 10^{-7} k_1 \sqrt{f} \quad (\Omega, Hz)$$

Daraus ist zu erkennen, dass die Widerstandsverluste $\alpha_R$ des Innenleiters $\alpha_i$ und des Außenleiters $\alpha_a$ im Wesentlichen abhängig sind von $\sqrt{f}$, sowie von der Leitfähigkeit und der Dicke der Leitschicht, die umgekehrt proportional wirken.

Für $\alpha_R = \alpha_i + \alpha_a$ gilt bei gleichen Leitermaterialien pro Längeneinheit

$$\alpha_R = \frac{2,5 \cdot 10^{-7}}{2\pi}\sqrt{f}\left(\frac{1}{D} + \frac{1}{d}\right)\sqrt{\frac{C'}{L'}}$$

Bei Leitern mit rauen Oberflächen sind die Stromwege länger und die Wirkwiderstände und Verluste größer als bei Leitern mit glatten Oberflächen. Kontaktstellen sollen daher kurze Stromwege aufweisen.

Die Wirkung der dietektrischen Verluste im Ableitungsbelag G' wird allgemein durch den Ausdruck

$$\alpha_G = \pi f \sqrt{L'C'} \tan \delta\varepsilon$$

beschrieben. Die Ableitungsverluste wachsen proportional mit f, wenn $\delta\varepsilon$ annähernd frequenzunabhängig ist.

Reflexionsfaktor

Als bestimmendes Maß für die Güte einer koaxialen Verbindung wird der auf den Nennwert des Wellenwiderstandes $Z_L$ bezogene Reflexionsfaktor r definiert:

$$|r| = \frac{Z - Z_L}{Z + Z_L}.$$

mit Z als gemessener Wellenwiderstand am betreffenden Ort der Leitung und $Z_L$ als Wellenwiderstand an der Leitung (Nennwert).

Ebenso kann der Reflexionsfaktor durch Ermittlung der Spannungsverteilung längs einer Messleitung bestimmt werden:

$$|r| = \frac{U_{max} - U_{min}}{U_{max} + U_{min}}.$$

Diesbezügliche Messverfahren sind durch DIN 47275 Teil 3 festgelegt. In diesem Zusammenhang sind auch die Größen Welligkeitsfaktor

$$s = \frac{U_{max}}{U_{min}} = \frac{1 + |r|}{1 - |r|}$$

und Anpassungsfaktor

$$m = \frac{U_{min}}{U_{max}} = \frac{1 - |r|}{1 + |r|}$$

definiert. Je kleiner der Reflexionsfaktor bei einer Frequenz ist, desto besser ist das koaxiale Verbindungssystem.

Weitere Ausführungsformen machen sich diese Zusammenhänge zu Nutze, indem Feldlinienänderungen oder Änderungen der Dämpfung der Koaxialwelle in Abhängigkeit von der Wirkung der Beschleunigung erfasst werden.

Im Lenkradkranz 10 hat, das Dielektrikum 30, 30A, 30B Einfluss auf die Ausbreitung der koaxialen Welle.

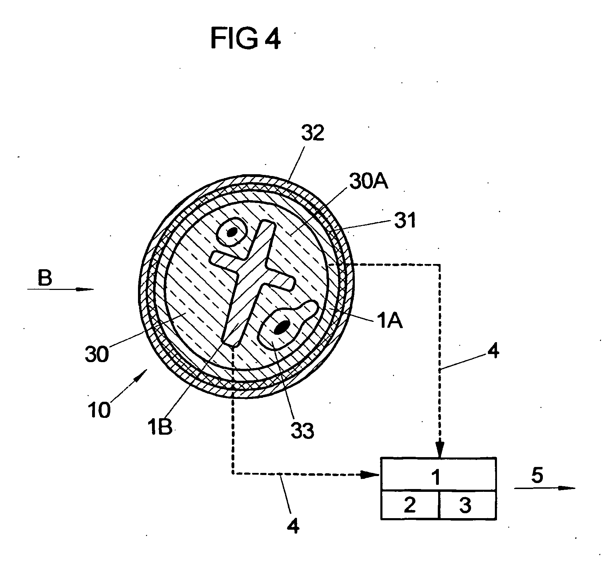

Eine dritte Ausführungsform unter Ausnutzung dieser Effekte ist in Fig. 4 dargestellt. Der Grundaufbau des Skeletts 1 B als Innenleiter, einem Außenleiter 1 B und das erste dielektrische Element 30A entsprechen dem Gegenstand der Fig. 1 und 2.

In einer dritten Ausführungsform gemäß Fig. 4 sind in der Schaumstoffschicht als dielektrisches Element 30A mit Flüssigkeit gefüllte Hohlräume 33 angeordnet. Alternativ können auch Flüssigkeitsschläuche eingearbeitet sein.

Im Falle eines Aufpralls erfahren die gefüllten Hohlräume 33 im Lenkradkranz eine Kraftwirkung auf Grund der Beschleunigung. Damit ändern sich die dielektrischen Eigenschaften im Lenkradkranz 10, was wiederum zu einer detektierbaren Veränderung der Wellenausbreitung führt; Signale werden verändert oder verzögert.

Diese Signalveränderungen können zusätzlich oder alternativ zu den Signalen verwendet werden, die sich auf Grund von Verformungen aus den kapazitiven oder induktiven Signalen ergeben. Auch können diese Signalveränderungen zusätzlich zu den Änderungen des Wellenwiderstands durch Änderungen der Geometrie verwendet werden.

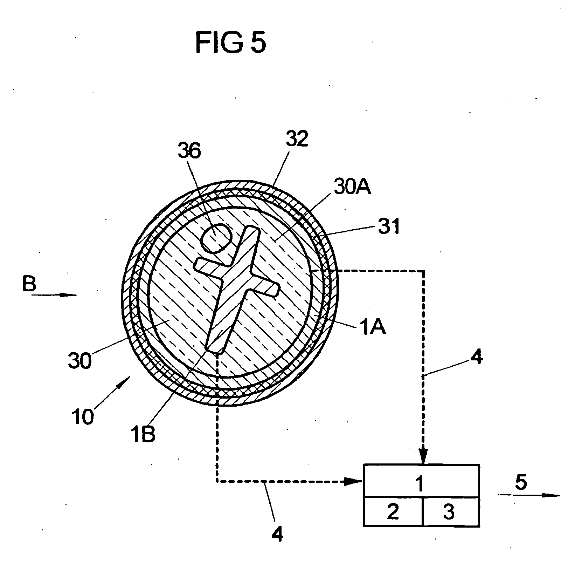

In Fig. 5 ist eine vierte Ausführungsform schematisch darstellt, bei der neben dem Skelett im Inneren des Lenkrades 10 z.B. eine Antennenschtaufe 36 angeordnet ist, wobei diese mit dem Skelett 1 B gekoppelt sein kann. Diese Antenne strahlt eine Welle ab, wobei sich im Falle eines Crashs die Welleneigenschaften der Feldlinien des abgestrahlten Feldes ändern. Diese Änderungen (frequenzabhängig oder nicht frequenzabhängig) sind als Auswirkungen von Beschleunigungen richtungsweisend detektierbar und können im Rahmen eines Crashsensors verwendet werden. Diese Ausführungsform geht somit nicht direkt von einer koaxialen Anordnung aus.

Allen dargestellten Ausführungsformen gemeinsam ist, dass ein Schwellenwert definiert werden kann, unterhalb dessen das Sensorsystem kein Crashsignal abgibt. So kann das Lenkrad durch normale Beanspruchung beim Fahren verformt werden, wobei die Verformungsgröße und / oder die Verformungsgeschwindigkeit sich deutlich von denen bei Aufprallereignissen unterscheiden.

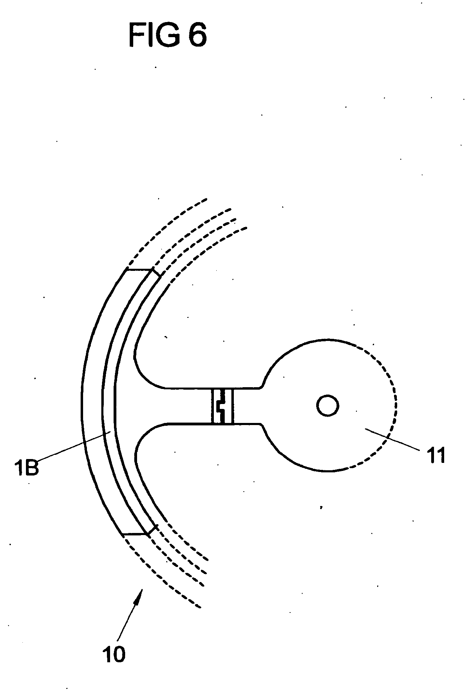

In Fig. 6 ist dargestellt, wie eine elektrische Entkopplung des Lenkradkranzes 10 von der Tellerplatte 11 ausgebildet sein kann. Dabei wird in einer Speiche 35 des Lenkrades ein elektrisch nicht leitender Abschnitt eingeführt, der die Tellerplatte 11 elektrisch vom Lenkrad isoliert.

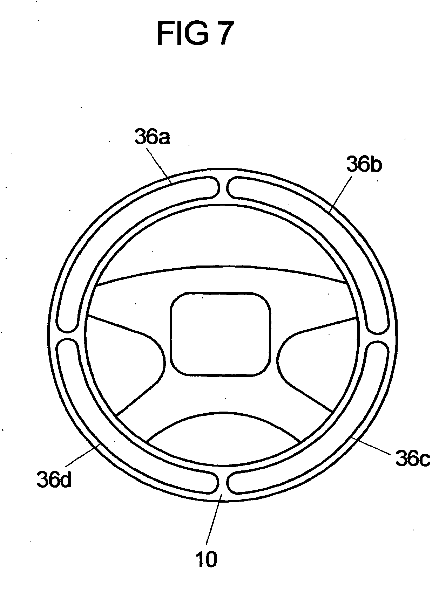

In Fig. 7 ist eine Ausführungsform dargestellt, bei der im Lenkradkranz 10 vier Leiterschlaufen 36a, 36b, 36c, 36d angeordnet sind. Die Leiterschlaufen 36a, 36b, 36c, 36d sind jeweils in den vier Quadranten angeordnet. Bei einer Bewegung des Lenkrades kann erkannt werden, in welcher Lage die jeweiligen Leiterschlaufen 36a, 36b, 36c, 36d sind, so dass auch dieser Lageinformationen z.B. Informationen über die Art des Crashereignisses (Frontalcrash, Seitencrash, Roll-Over etc.) abgeleitet werden können.

Die Erfindung beschränkt sich in ihrer Ausführung nicht auf die vorstehend angegebenen bevorzugten Ausführungsbeispiele. Vielmehr ist eine Anzahl von Varianten denkbar, die von dem erfindungsgemäßen Sensorsystem auch bei grundsätzlich anders gearteten Ausführungen Gebrauch machen.

Bezugszeichenliste

| | |
|---|---|
| 1 | Sensormittel zur Erfassung einer Beschleunigung |
| 1A | Außenleiter |
| 1B | Innenleiter |
| 2 | Sensoreinheit (induktiv) |
| 3 | Sensoreinheit (kapazitiv) |
| 4 | Eingangssignale |
| 5 | Ausgangssignale |
| 10 | Lenkradkranz |
| 11 | Lenkradteller |
| 12 | Auslösemittel |
| 13 | Auslösesignal |
| 20 | Airbag |
| 30 | dielektrisches Element, Schaumschicht |
| 30A | dielektrisches Element |
| 30B | dielektrisches Element |
| 31 | Abschirmschicht |
| 32 | Hülle |
| 33 | mit Flüssigkeit gefüllte Hohlräume |
| 35 | Speiche |
| 36 | Antenne, Antennenschtaufe |
| 40 | Äquipotentiallinien |
| 41 | Äquikapazitätsstreifen |
| 42 | elektrische Feldlinie |
| $r_A$ | Radius zum Außenleiter |
| $r_I$ | Radius des Innenleiters |
| D | Innendurchmesser des Außenleiters |
| d | Außendurchmesser des Innenleiters |
| $\varepsilon_r$ | Dielektrizitätskonstante-des Dielektrikums |

| | |
|---|---|
| $\varepsilon_0$ | elektrische Feldkonstante |
| $\mu_r$, | Permeabilitätszahl des Dielektrikums |
| $\mu_0$ | magnetische Feldkonstante |

**Patentansprüche**

1.  Sensorsystem für ein Lenkrad eines Kraftfahrzeugs, wobei im und / oder an eine Lenkradkranz (10) mindestens ein Sensormittel (1) zur Erfassung der Wirkung einer Beschleunigung (B) angeordnet ist, **dadurch gekennzeichnet, dass** das mindestens eine Sensormittel (1) eine kapazitive und / oder eine induktive Sensoreinheit (2, 3) aufweist oder mit einer kapazitiven und / oder induktiven Sensoreinheit (2, 3) gekoppelt ist, wobei die Sensoreinheit (2, 3) ein frequenzunabhängiges Signal oder ein frequenzabhängiges Signal aufnehmen kann, wobei die kapazitive und / oder induktive Sensoreinheit (2, 3) mit Teilen (1A, 1B) des Lenkrades unterschiedlicher Masse, Steifigkeit und / oder Dichte gekoppelt sind, so dass aus der Verformung der Teile (1A, 1B) des Lenkradkranzes ein Signal zur Erfassung der Beschleunigung (B) generierbar ist.

2.  Sensorsystem nach Anspruch 1, **dadurch gekennzeichnet, dass** der Lenkradkranz (10) mindestens einen elektrischen Außenleiter (1A) und mindestens einen elektrischen Innenleiter (1 B) zur Bildung einer koaxialen Anordnung aufweist.

3.  Sensorsystem nach Anspruch 2, **dadurch gekennzeichnet, dass** das Sensormittel (1) die Feldwirkung, die Kraftwirkung und / oder die resultierende Verformung eines Teils des Lenkrades relativ zu dem mindestens einen Außenleiter (1A) und / oder zu dem mindestens einen Innenleiter (1 B) erfasst.

4.  Sensorsystem nach mindestens einem der vorhergehenden Ansprüche, **dadurch gekennzeichnet, dass** das Sensormittel (1) den Abstand zwischen zwei Teilen (1A. 1 B) des Lenkradkranzes (10) erfasst.

5.  Sensorsystem nach einem der Ansprüche 2 bis 4, **dadurch gekennzeichnet, dass** die kapazitive und / oder induktive Sensoreinheit (2, 3) mit dem mindestens einen Außenleiter (1A) und dem mindestens einen Innenleiter (1B) gekoppelt sind.

6.  Sensorsystem nach mindestens einem der vorhergehenden Ansprüche, **dadurch gekennzeichnet, dass** ein Sendemittel (1A), insbesondere mindestens eine Antennenschlaufe (36, 36a, 36b, 36c, 36d) zur Abstrahlung einer Koaxialwelle, einer TE-Welle, einer TM-Welle, einer TEM-Welle und / oder Welle und ein Sensormittel (1) zur Detektion einer Reflexion der Koaxialwelle, der TE-Welle, der TM-Welle, der TEM-Welle und / oder der Welle aufweist.

**7.** Sensorsystem nach Anspruch 6, **dadurch gekennzeichnet, dass** mindestens zwei Leiterschlaufen (36a, 36b, 36c, 36d) im Lenkradkranz (10) angeordnet sind.

**8.** Sensorsystem nach Anspruch 6 oder 7, **dadurch gekennzeichnet, dass** vier Leiterschlaufen (36a, 36b, 36c, 36d) symmetrisch im Lenkradkranz (10), insbesondere jeweils in einem Quadranten angeordnet sind.

**9.** Sensorsystem nach mindestens einem der Ansprüche 6 bis 8, **dadurch gekennzeichnet, dass** mindestens eine Antennenschlaufe (36a, 36b, 36c, 36d) und / oder eine Leiterschlaufe zur richtungsweisenden Erkennung einer Kraftwirkung verwendbar ist

**10.** Sensorsystem nach mindestens einem der Ansprüche 6 bis 9, **dadurch gekennzeichnet, dass** das Empfängermittel (5) eine Veränderung einer Eigenschaft der Koaxialwelle, insbesondere einer Feldlinienänderung und / oder eine Dämpfung in Abhängigkeit einer Relativbewegung von Teilen (1A, 1B) des Lenkrades erfasst.

**11.** Sensorsystem nach mindestens einem der Ansprüche 6 bis 10, **dadurch gekennzeichnet, dass** das Empfängermittel (5) den Reflexionsfaktor erfasst.

**12.** Sensorsystem nach mindestens einem der vorhergehenden Ansprüche, **dadurch gekennzeichnet, dass** das Skelett des Lenkradkranzes (10) mindestens teilweise als Innenleiter (1 B) ausgebildet ist.

**13.** Sensorsystem nach mindestens einem der vorhergehenden Ansprüche, **dadurch gekennzeichnet, dass** ein elektrisch leitendes Material, insbesondere eine Lenkradheizung im Lenkradkranz (10) mindestens teilweise als Außenleiter (1B) ausgebildet ist.

**14.** Sensorsystem nach mindestens einem der vorhergehenden Ansprüche, **dadurch gekennzeichnet, dass** mindestens ein dielektrisches Element (30, 30A, 30B) im Lenkradkranz (10) angeordnet ist.

**15.** Sensorsystem nach Anspruch 14, **dadurch gekennzeichnet, dass** das dielektrische Element (30, 30A, 30B) als Schaumstoffummantelung und / oder Flüssigkeitsbehälter im Lenkradkranz (10) angeordnet ist.

**16.** Sensorsystem nach mindestens einem der vorhergehenden Ansprüche, **dadurch gekennzeichnet, dass** der Lenkradkranz (10) elektrisch gegenüber dem Lenkradteller (11) isoliert ist.

**17.** Sensorsystem nach mindestens einem der vorhergehenden Ansprüche, **dadurch gekennzeichnet, dass** das durch Sensormittel (1) generierte Auslösesignal (5) den Airbag (20) zündet und / oder passive oder aktive Sicherheitssysteme auslöst.

**18.** Sensorsystem nach Anspruch 17, **dadurch gekennzeichnet, dass** das Auslösesignal (13) vom Sensormittel (1) erst abgegeben wird, wenn die Wirkung der Beschleunigung (B) einen vorbestimmten Wert überschreitet.

**19.** Lenkrad mit einem Sensorsystem nach mindestens einem der vorhergehenden Ansprüche.

## Claims

**1.** A sensor system for a steering wheel of a motor vehicle, wherein at least one sensor means (1) for sensing the effect of an acceleration (B) is arranged in and/or on a steering wheel rim (10), **characterized in that**, the at least one sensor means (1) has a capacitive and/or an inductive sensor unit (2, 3) or is coupled to a capacitive and/or inductive sensor unit (2, 3), wherein the sensor unit (2, 3) can receive a frequency-independent signal or a frequency-dependent signal, wherein the capacitive and/or inductive sensor unit (2, 3) are coupled to parts (1A, 1B) of the steering wheel with different masses, rigidities and/or densities so that a signal for sensing the acceleration (B) can be generated from the deformation of the parts (1A, 1B).

**2.** The sensor system as claimed in claim 1, **characterized in that** the steering wheel rim (10) has at least one electrical outer conductor (1A) and at least one electrical inner conductor (1B) for forming a coaxial arrangement.

**3.** The sensor system as claimed in claim 2, **characterized in that** the sensor means (1) senses the field effect, the force effect and/or the resulting deformation of part of the steering wheel relative to the at least one outer conductor (1A) and/or to the at least one inner conductor (1B).

**4.** The sensor system as claimed in at least one of the preceding claims, **characterized in that** the sensor means (1) senses the difference between two parts (1A, 1B) of the steering wheel rim (10).

**5.** The sensor system as claimed in one of the claims 2 to 4, **characterized in that** the capacitive and/or inductive sensor unit (2, 3) are coupled to the at least one outer conductor (1A) and the at least one inner conductor (1B).

**6.** The sensor system as claimed in at least one of the preceding claims, **characterized in that** a transmitting means (1A) has, in particular, at least one antenna loop (36, 36a, 36b, 36c, 36d) for emitting a coaxial wave, a TE wave, a TM wave, a TEM wave and/or a wave, and a sensor means (1) for detecting a reflection of the coaxial wave, of the TE wave, of the TM wave, of the TEM wave and/or of the wave.

**7.** The sensor system as claimed in claim 6, **characterized in that** at least two conductor loops (36a, 36b, 36c, 36d) are arranged in the steering wheel rim (10).

**8.** The sensor system as claimed in claim 6 or 7, **characterized in that** four conductor loops (36a, 36b, 36c, 36d) are arranged symmetrically in the steering wheel rim (10), in particular each in a quadrant.

**9.** The sensor system as claimed in at least one of claims 6 to 8, **characterized in that** at least one antenna loop (36a, 36b, 36c, 36d) and/or a conductor loop can be used for direction-indicating detection of a force effect.

**10.** The sensor system as claimed in at least one of claims 6 to 9, **characterized in that** the receiver means (5) senses a change in a property of the coaxial wave, in particular a field line change and/or attenuation as a function of a relative movement of parts (1A, 1B) of the steering wheel.

**11.** The sensor system as claimed in at least one of claims 6 to 10, **characterized in that** the receiver means (5) senses the reflection factor.

**12.** The sensor system as claimed in at least one of the preceding claims, **characterized in that** the skeleton of the steering wheel rim (10) is embodied at least partially as an inner conductor (1B).

**13.** The sensor system as claimed in at least one of the preceding claims, **characterized in that** an electrically conductive material, in particular a steering wheel heating device is embodied in the steering wheel rim (10), at least partially as an outer conductor (1B).

**14.** The sensor system as claimed in at least one of the preceding claims, **characterized in that** at least one dielectric element (30, 30A, 30B) is arranged in the steering wheel rim (10).

**15.** The sensor system as claimed in claim 14, **characterized in that** the dielectric element (30, 30A, 30B) is arranged as a foamed material jacket and/or liquid container in the steering wheel rim (10).

**16.** The sensor system as claimed in at least one of the preceding claims, **characterized in that** the steering wheel rim (10) is electrically insulated with respect to the steering wheel plate (11).

**17.** The sensor system as claimed in at least one of the preceding claims, **characterized in that** the triggering signal (5) which is generated by sensor means (1) fires the airbag (20) and/or triggers passive or active safety systems.

**18.** The sensor system as claimed in claim 17, **characterized in that** the triggering signal (13) is not output by the sensor means (1) until the effect of the acceleration (B) exceeds a predetermined value.

**19.** A steering wheel having a sensor system as claimed in at least one of the preceding claims.

**Revendications**

**1.** Système capteur pour un volant de direction d'un véhicule automobile, dans lequel au moins un moyen formant capteur (1) destiné à détecter l'effet d'une accélération (B) est agencé dans et/ou sur une couronne (10) du volant,
**caractérisé en ce que**
ledit au moins un moyen formant capteur (1) comprend une unité à capteur (2, 3) capacitive et/ou inductive, ou est couplé à une unité à capteur (2, 3) capacitive et/ou inductive, ladite unité à capteur (2, 3) étant capable d'enregistrer un signal indépendant de la fréquence ou un signal dépendant de la fréquence, ladite unité à capteur (2, 3) capacitive et/ou inductive étant couplée à des parties (1A, 1B) du volant présentant des masses, des rigidités et/ou des densités différentes, de sorte qu'un signal pour la détermination de l'accélération (B) peut être généré à partir de la déformation des parties (1A, 1B) de la couronne du volant.

**2.** Système capteur selon la revendication 1, **caractérisé en ce que** la couronne du volant (10) comprend au moins un conducteur électrique extérieur (1A) et au moins un conducteur électrique intérieur (1B) pour réaliser un agencement coaxial.

**3.** Système capteur selon la revendication 2, **caractérisé en ce que** le moyen formant capteur (1) détecte l'effet de champ, l'effet des efforts et/ou la déformation résultante d'une partie du volant par rapport audit au moins un conducteur extérieur (1A) et/ou par rapport audit au moins un conducteur intérieur (1B).

**4.** Système capteur selon l'une au moins des revendications précédentes, **caractérisé en ce que** le moyen formant capteur (1) détecte la distance entre deux parties (1A, 1B) de la couronne du volant (10).

5. Système capteur selon l'une des revendications 2 à 4, **caractérisé en ce que** l'unité formant capteur (2, 3) capacitive et/ou inductive est couplée avec ledit au moins un conducteur extérieur (1A) et avec ledit au moins un conducteur intérieur (1B).

6. Système capteur selon l'une au moins des revendications précédentes, **caractérisé en ce qu'**il comprend un moyen émetteur (1A), en particulier au moins une boucle d'antenne (36, 36a, 36b, 36c, 36d) destinée à rayonner une longue coaxiale, une onde TE, une onde TM, une onde TEM et/ou une onde, et un moyen formant capteur (1) pour la détection d'une réflexion de l'onde coaxiale, de l'onde TE, de l'onde TM, de l'onde TEM et/ou de l'onde.

7. Système capteur selon la revendication 6, **caractérisé en ce qu'**au moins deux boucles conductrices (36a, 36b, 36c, 36d) sont agencées dans la couronne du volant (10).

8. Système capteur selon la revendication 6 ou 7, **caractérisé en ce que** quatre boucles conductrices (36a, 36b, 36c, 36d) sont agencées symétriquement dans la couronne du volant (10), en particulier chacune dans un quadrant.

9. Système capteur selon l'une au moins des revendications 6 à 8, **caractérisé en ce qu'**au moins une boucle d'antenne (36a, 36b, 36c, 36d) et/ou une boucle conductrice est utilisable pour reconnaître en termes de direction l'effet d'une force.

10. Système capteur selon l'une au moins des revendications 6 à 9, **caractérisé en ce que** le moyen récepteur (5) détecte une modification d'une propriété de l'onde coaxiale, en particulier une modification des lignes de champ et/ou un amortissement en fonction d'un mouvement relatif de parties (1A, 1B) du volant de direction.

11. Système capteur selon l'une au moins des revendications 6 à 10, **caractérisé en ce que** le moyen récepteur (5) détecte le facteur de réflexion.

12. Système capteur selon l'une au moins des revendications précédentes, **caractérisé en ce que** l'ossature de la couronne du volant (10) est réalisée au moins partiellement à titre de conducteur intérieur (1B).

13. Système capteur selon l'une au moins des revendications précédentes, **caractérisé en ce qu'**un matériau électriquement conducteur, en particulier un chauffage de volant dans la couronne du volant (10) est réalisé au moins partiellement à titre de conducteur extérieur (1B).

14. Système capteur selon l'une au moins des revendications précédentes, **caractérisé** au ce qu'au moins un élément diélectrique (30, 30A, 30B) est agencé dans la couronne du volant (10).

15. Système capteur selon la revendication 14, **caractérisé en ce que** l'élément diélectrique (30, 30A, 30B) est agencé dans la couronne du volant (10) sous forme d'enrobage en mousse et/ou de récipient à liquide.

16. Système capteur selon l'une au moins des revendications précédentes, **caractérisé en ce que** la couronne du volant (10) est isolée électriquement par rapport au plateau (11) du volant.

17. Système capteur selon l'une au moins des revendications précédentes, **caractérisé en ce que** le signal de déclenchement (5) engendré par le moyen formant capteur provoque l'allumage de l'airbag (20) et/ou déclenche des systèmes de sécurité passifs ou actifs.

18. Système capteur selon la revendication 17, **caractérisé en ce que** le signal de déclenchement (13) est délivré par le moyen formant capteur (1) uniquement quand l'effet de l'accélération (B) dépasse une valeur prédéterminée.

19. Volant de direction comprenant un système capteur selon l'une au moins des revendications précédentes.

# FIG 1

# FIG 2

# FIG 3A

# FIG 3B

EP 1 931 539 B1

# FIG 4

# FIG 5

# FIG 6

# FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1491409 B1
- EP 1621442 A2